Europäisches Patentamt

European Patent Office

Office européen des brevets

(19)

(11) Publication number: **0 001 188**
B1

(12) **EUROPEAN PATENT SPECIFICATION**

(45) Date of publication of patent specification: **27.04.83**

(21) Application number: **78300379.1**

(22) Date of filing: **12.09.78**

(51) Int. Cl.³: **G 01 L 7/08, G 01 L 13/02, G 01 L 19/00, G 05 D 9/04**

(54) **Pressure transmitting device and a control or regulating system using it.**

(30) Priority: **12.09.77 GB 3798477**

(43) Date of publication of application:
**21.03.79 Bulletin 79/6**

(45) Publication of the grant of the patent:
**27.04.83 Bulletin 83/17**

(84) Designated Contracting States:
**BE CH DE FR GB NL SE**

(56) References cited:
**GB - A - 815 744**
**GB - A - 1 172 400**
**GB - A - 1 270 391**
**GB - A - 1 287 449**
**GB - A - 1 327 754**
**GB - A - 1 414 642**
**US - A - 2 649 714**
**US - A - 3 845 664**

(73) Proprietor: **HOLLEDGE (INSTRUMENTS) LIMITED**
**26 Orchard Street**
**Crawley Sussex (GB)**

(72) Inventor: **Holledge, Eric John**
**26 Orchard Street**
**Crawley Sussex (GB)**

(74) Representative: **Thiemann, Peter Albert William et al,**
**LLOYD WISE, TREGEAR & CO. Norman House**
**105–109 Strand**
**London, WC2R 0AE (GB)**

Courier Press, Leamington Spa, England

## Pressure transmitting device and a control or regulating system using it.

This invention relates to a pressure transmitting device which is useful as a functional element of a control or regulating system.

In the Specification of British Patent No. 1,270,391 there is described a pressure transmitting device which can be used to give a pneumatic or hydraulic signal which can be converted to an electrical signal which can be fed to a transducer and thereby serve to control a process in which, for example, the level of a liquid has to be constantly monitored or measured. The device is invariably required in order to be able to supervise or control an industrial process, such as the brewing of beer, where the level of liquid in brewing and storage vats has to be monitored.

The pressure transmitting device of British Patent No. 1,270,391 comprises a chamber, a diaphragm closing one end of the chamber, a valve member fixed to the diaphragm, a bleed nozzle mounted in the chamber so as to be closable by the valve member upon movement of the diaphragm and means for admitting a fluid under pressure into the chamber. The arrangement is such that, when the pressure on the outside of the diaphragm remote from the chamber is greater than the pressure in the chamber, the valve member closes the nozzle to allow the pressure in the chamber to build up, by admission of said fluid, to a value where the pressure in the chamber is the same as that on the outside of the diaphragm, thereby opening the nozzle and allowing the fluid to bleed away from the chamber through the nozzle. A damper mechanism may be carried by the valve member and engages against the wall or walls of the chamber for the purpose of suppressing pneumatic or hydraulic harmonics of the diaphragm, but it has been found that the damper mechanism may be dispensed with in certain cases.

The device is preferably substantially mushroom-shaped, having a head mounting and supporting said diaphragm and a stem defining said chamber.

As indicated above, the aforesaid pressure transmitting device is a functional element of a control system and may be fitted in pipes or tanks which form part or are controlled by the control system. However, during change-over operations or cleaning operations, the pipes or tanks may be subjected to pressures which are adverse to the transmitting device, such adverse pressures including ram pressures or vacuum pressures which may distort the diaphragm of the transmitting device to such an extent that its control characteristics are destroyed, or even in rare circumstances to such an extent that the diaphragm is ruptured with possible subsequent loss of pressure or valuable fluids.

Furthermore, United States Patent Specification No. 3,845,664 describes a pressure transducer comprising a body member defining a chamber, a first diaphragm closing one end of the chamber, a second diaphragm, a separating member separating the first and second diaphragm, a bleed nozzle mounted in the chamber so as to be closeable upon movement of the first diaphragm, and means for admitting fluid under pressure into the chamber, the arrangement of the device being such that when the pressure on the outside of the second diaphragm remote from the chamber is greater than the pressure in the chamber, the second diaphragm moves with the first diaphragm to cause closure of the bleed nozzle and allow pressure in the chamber to build up to a value where the pressure in the chamber is equal to that in the second diaphragm, thereby allowing the bleed nozzle to open and allowing the fluid to bleed away.

In this transducer, the diaphragms are made of thin, flexible and stretchable material and shown as being made of rubber or plastics. The diaphragms are separated by a separating member in the form of a force button the diameter of which is large in relation to the effective diameter of the diaphragm, and to which the diaphragms may be adhered. It is necessary for the space between the diaphragms to be open to the atmosphere in order to prevent distortions and false readings from occurring due to changes in ambient temperature and pressure.

Because the diaphragms are made of rubber, plastics or like thin, flexible and stretchable material, the range of liquids with which the transducer can be used in limited, and the pressure range over which it can be used without distortion of the diaphragms is also limited.

It is an object of the invention to provide a pressure transmitting device useful as a functional element of a control or regulating system, which is less susceptible to distortion or destruction under adverse pressure conditions than previously proposed devices and which, upon any such distortion or destruction occurring, will operate to generate a signal indicating such a fault has occurred.

According to the present invention there is provided a pressure transmitting device useful as a functional element of a control or regulating system, comprising a body member defining a chamber, a first diaphragm closing one end of the chamber, a second diaphragm, a separating member separating the first and second diaphragms, a bleed nozzle mounted in the chamber so as to be closeable upon movement of the first diaphragm, and means for admitting fluid under pressure into the chamber, the arrangement of the device being such that when the pressure on the outside of the second diaphragm remote from the chamber is greater than the pressure in the chamber, the second diaphragm moves with the first diaphragm to cause closure of the bleed nozzle and allow pressure in the chamber to build up to a value where the pressure in the chamber is equal to that in the second diaphragm, thereby allowing the bleed nozzle to open and allowing the fluid to bleed away, characterised in that it comprises a head member mounting and supporting the first and second diaphragms and a valve member associated with the first diaphragm and in that the first and second diaphragms are metallic diaphragms welded in place and attached to the separating member, and in that the space between the diaphragms is filled with a liquid or a gas under pressure and sealed. The device is preferably substantially mushroom-shaped, having a stem defining the chamber, but can be of any other desired shape.

The two diaphragms including the separating member and the head member may be made in the form of a capsule which can be attached to a secondary head member connected to the stem.

The device of the present invention may incorporate a damper mechanism if it is desired to suppress pneumatic and hydraulic harmonics of the diaphragm, but it may be dispensed with, especially in cases where such harmonics can be tolerated or the device is not subjected to such rapid pressure changes as to be likely to cause hunting of the diaphragm, e.g. where steady state pressure readings rather than instantaneous pressure charge readings are required. Such a damping mechanism may take the form of a spider member the body of which is attached to the valve member made and the legs of which are in frictional contact with the walls of the chamber. The spider member is preferably made from a resilient material which has a low coefficient of friction when in contact with the material of the walls of the chamber in the presence of the fluid, such as polytetrafluoroethylene or a chlorinated derivative thereof, or nylon.

The gas or liquid fill is preferably a gas or liquid which is compatible with the process being monitored, and which will not create any undue hazard if leakage due to diaphragm rupture or damage occurs. If the fill is a gas, nitrogen is preferred to air as it has better characteristics under changing temperature than has air for the purposes of the present invention.

The fluid admitted to the chamber may be air, or any convenient gas or liquid for example an oil, but if air is not used it is preferable to provide a recirculation system for the fluid connected to the nozzle and to the means for admitting the fluid, and preferably comprising a fluid reservoir.

The material from which the present transmitting device is made is selected according to the purpose for which it is to be used and suitable materials are described in the Specification of British Patent No. 1,270,391.

According to another aspect of the present invention there is provided a control or regulating system, comprising at least one pressure transmitting device mounted in a tank, pipe or the like in which or through which the level or flow of a liquid is to be controlled, so that said second diaphragm is in contact with the liquid, means for supplying a fluid under pressure into said chamber, signal-generating means responsive to the pressure of fluid in said chamber, and control means for controlling the level and/or flow of the liquid in response to signals generated by said signal-generating means, characterised in that the pressure transmitting device is the device claimed in any one of Claims 1 to 5 with its said second diaphragm in contact with the liquid.

The device may be used for monitoring the pressure inside closed tanks, or coupled with another such device, for monitoring the depth of liquid in a pressurised tank.

The device may be mounted in a tank or pipe by bolting a flange over the head or threading the outside of the stem for a nut, or in other fashion.

The device according to the present invention is advantageously employed in situations where there are large temperature variations. The separating member between the diaphragms substantially prevents distortion and variations in the distance of separation between the diaphragms due to expansion and contraction of the gas or liquid fill. It is preferable if the diaphragms, the separating member, and the valve member are co-axially aligned. In the absence of the separating member, expansion of the gas or liquid fill due to a temperature rise would cause the diaphragms to move apart, the first diaphragm moving towards the nozzle, thus upsetting the calibration of the device.

In order to enable the invention to be more readily understood, reference will now be made to the accompanying drawings, which illustrate diagrammatically and by way of example an embodiment thereof, and in which:—

Fig. 1 is an axial section through a pneumatically operated pressure transmitter, and

Fig. 2 shows a control system for controlling the liquid level in a tank using the pressure transmitter as shown in Fig. 1.

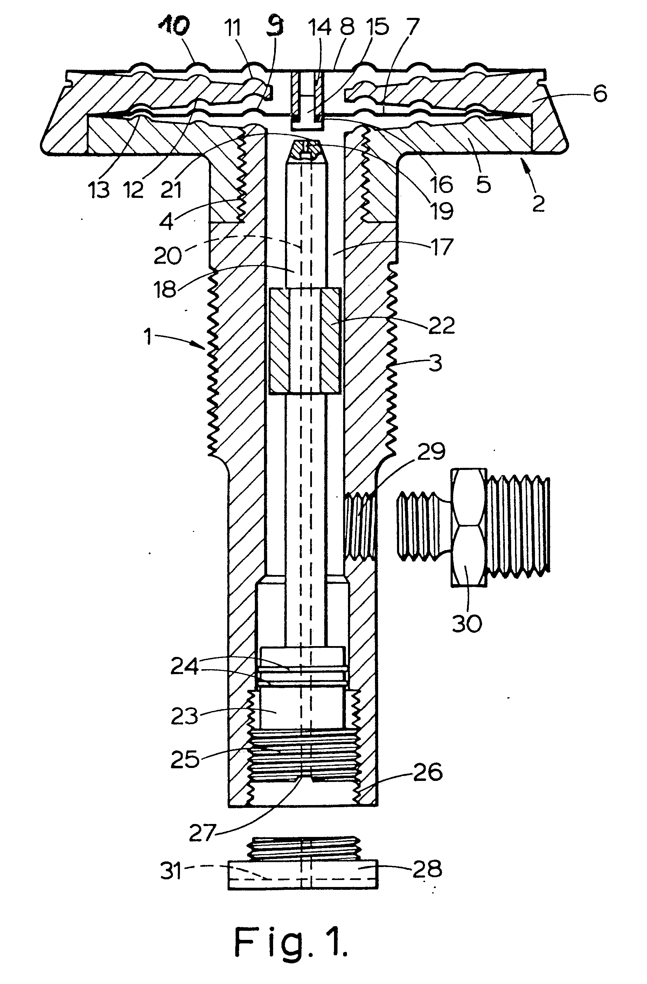

Referring now to Fig. 1, there is shown a pressure transmitter which is substantially mushroom-shaped having a stem 1 and a cap 2. The stem consists of an open-ended tube of substantially circular cross-section having an externally threaded portion 3 whereby the transmitter can be fitted to the apparatus with which it is to be used. One end 4 of the stem is formed with reduced external diameter and is externally threaded to receive the cap 2.

The cap 2 consists of a head member 5 in the form of a flanged spigot having an internally threaded stem to engage the end 4 of the stem 1, and an inverted cup-like head member 6 formed with a central aperture and engaging over the head member 5. The member 5 mounts a first diaphragm 7 and the member 6 mounts a second diaphragm 8. Each diaphragm is conveniently made of stainless steel and is preferably welded to the outer edge of its respective head member by argon-arc welding.

The side wall of head member 5 engages the inside wall of the head member 6 in a pressure-tight and fluid-tight manner as by screw threading and it will be seen that the central portion of the head member 6 is effectively captive between the two diaphragms 7 and 8. The diaphragms 7 and 8 have corrugations 9 and 10 respectively which can mate with matching corrugations 11 and 12 respectively in the head member 6, and, in addition, the head member 5 is formed with corrugations 13 matching those on the diaphragm 7. The corrugations may be annular (as shown), or resemble cartwheels or spoke layouts or have another desired configuration.

The diaphragms 7 and 8 are separated by a separating member comprising a pallet 14, welded to diaphragm 8 and passing through the central aperture in the head member 6. The pallet 14 is attached to diaphragm 7 by a plug 15, which passes through the diaphragm 7 and which forms a valve member. The space defined between the diaphragms 7 and 8 and the head members 5 and 6 and surrounding the pallet 14, is filled with a gas or liquid fill before insertion of the plug 15 which is provided with a seal 19.

The stem 1 of the transmitter is hollow to define a substantially cylindrical chamber 17.

A nozzle 18 is positioned within the stem 1 within its axis of the stem 1. The nozzle has a bleed orifice 19 which leads into a bore 20 extending through the length of the nozzle. The nozzle has an accurately flat end face 21 for engaging against the end face of the plug 15. The nozzle is guided in the chamber 17 by a centring block 22 which is in the form of a cylinder with four flats formed on its side. At its lower end, the nozzle has a widened portion 23 which carries two O-rings 24 for sealing the lower end of the nozzle, and which is mounted on a threaded portion 25 which engages internal threading 26 formed on the interior of the stem 1, the threaded portion 25 being formed with a groove 27 so that the longitudinal position of the nozzle in the stem can be adjusted by means of a screw-driver. The lower end of the stem 1 is closed by a vent cap 28 formed with a bore registering with the bore 20, and with a cruciform recess 31.

The stem is formed with a threaded aperture 29 in which a connector 30 can be fixed for admitting pressure fluid to the interior of the stem.

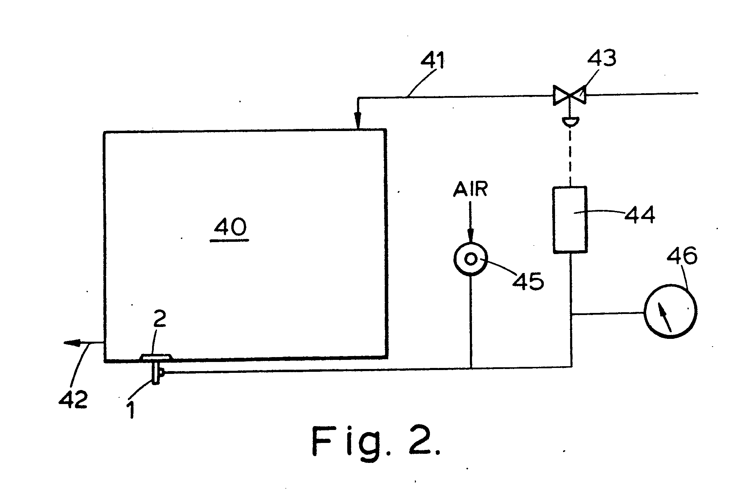

In the operation of the transmitter just described, the transmitter is, for example, fitted in the wall of a tank 40 in the manner shown in Figure 2 so that the contents of the tank exert on the diaphragm 8 a pressure which it is desired to control so as to control the level in the tank 40. The tank 40 has an inlet pipe 41 for liquid and an outlet pipe 42 with the pressure transmitter 1, 2 fitted in the bottom of the tank. A valve 43 in the pipe 41 and is controlled by a control system 44. In the operation of this control system, pressure fluid, for example air, is admitted to the chamber 17 via the connector 30 from a pressure regulator 45 which is arranged to feed air to the chamber at a substantially constant flow rate at which it can be exhausted through the bleed orifice 19. For a bleed orifice having a diameter of about thirty thousandths of an inch, a convenient rate of flow for the air is $1\frac{1}{2}$ cu. ft. per hour. Provided that the pressure exerted on the outside of the diaphragm 8 is the same as the pressure in the chamber 17, the end face 15 of the set-screw 14 and the end face 21 of the nozzle will be disengaged with the air will bleed through the orifice 19, the bore 20 and the vent cap 28 to atmosphere. If the pressure on the outer surface of the diaphragm 8 is increased, both diaphragms will move downwardly (as viewed in Fig. 1) and the plug 15 will seal off the bleed orifice 19 in the end of the nozzle thereby preventing air in the chamber from bleeding to atmosphere. The pressure of the air admitted through the connector 30 now increases until it is substantially the same as the pressure on the outer surface of the diaphragm whereupon the diaphragm lifts the set-screw off the nozzle end and air again bleeds to atmosphere. The increase in the pressure of the air admitted to the stem can readily be measured, if desired, on an indicator 46 thereby providing a measure of the increase in pressure applied to the outer surface of the diaphragm.

Thus pressure variations on the pressure transmitter due to variations in the level in the tank 40 will be fed to the control system 44 which is arranged to open or close the valve 43 so as to maintain the level of the liquid in the tank constant.

It will be appreciated that, when an increase in pressure is applied to the diaphragm 8 this increase in pressure is transmitted to the gas or liquid fill by movement of the diaphragm 8, and diaphragm 7 is moved by the action of the pallet 14 so that the plug 15 closes or partially closes the nozzle 18. If a pressure decrease now occurs in the tank 40 the reverse occurs, and the pressure in the chamber decreases due to the escape of the fluid through the nozzle 18 until equilibrium between the pressure in the tank 40 and the pressure in the chamber 17 is attained.

If the fluid being admitted to the chamber is air, and the tank is operating below atmospheric pressure, it may be necessary to apply vacuum to the nozzle 18 to achieve the required pressure balance.

Under vacuum overload conditions, the diaphragm 7 is supported by head member

6, and the diaphragm 8 is partially supported by the gas or liquid fill and the pallet 14, whereas under high pressure overload conditions, the diaphragms 7 and 8 are supported by the head members 5 and 6 respectively, and also by the pallet 14.

In the event of a large increase or decrease in temperature, variations in the pressure of the gas, or liquid fill affect each diaphragm equally but in opposite directions, and since the diaphragms are constrained together by the pallet 14, the position of the plug 15 relative to the nozzle 18 is substantially unaltered, and the measurements made by the device need not be adjusted for temperature deviations.

Furthermore, the liquid or gas fill between the diaphragms will cushion the diaphragms against any adverse pressures such as mentioned above so that there is less risk of distortion of the diaphragms.

Finally an important advantage of the present transmitter is that if by any chance one or other of the diaphragms should rupture, either due to the effect of any adverse pressure or due to any welding defect in attaching the diaphragms, the operating characteristic of the transmitter will alter fundamentally as the remaining diaphragm is subjected to the operating pressure. This alteration of the operating characteristic will provide a signal for the control means which can be used to operate an alarm or shut down the process being controlled, either in total or in part until a repair can be effected. Furthermore, since one diaphragm still remains, the tank is sealed so that its content cannot leak through the transmitter which may be of substantial importance where the transmitter is used in the control of process involving, toxic, hazardous or valuable chemicals.

## Claims

1. A pressure transmitting device useful as a functional element of a control or regulating system, comprising a body member defining a chamber (17), a first diaphragm (7) closing one end of the chamber, a second diaphragm (8), a separating member (14) separating the first and second diaphragms, a bleed nozzle (18) mounted in the chamber so as to be closeable upon movement of the first diaphragm, and means (29, 30) admitting fluid under pressure into the chamber, the arrangement of the device being such that when the pressure on the outside of the second diaphragm remote from the chamber is greater than the pressure in the chamber, the second diaphragm moves with the first diaphragm to cause closure of the bleed nozzle and allow pressure in the chamber to build up to a value where the pressure in the chamber is equal to that in the second diaphragm, thereby allowing the bleed nozzle to open and allowing the fluid to bleed away, characterized in that it comprises a head member (6) mounting and supporting the first and second diaphragms and a valve member (15) associated with the first diaphragm and in that the first and second diaphragms (7, 8) are metallic diaphragms welded in place and attached to the separating member (14), and in that the space between the diaphragms (7, 8) is filled with a liquid or a gas under pressure and sealed.

2. A device as claimed in Claim 1, characterised in that the device is substantially mushroom-shaped, having the head mounting and supporting the diaphragms and a stem (1) defining the chamber.

3. A device as claimed in Claim 1 or 2, characterised in that the head member (6) is formed in two parts, one being in the form of a flanged spigot (5) mounting the first diaphragm (7) and the other being in the form of a centrally-apertured cup (6) and mounting the second diaphragm (8), the two parts being assembled so that the base of the cup (6) lies between the two diaphragms with the separating member passing through the central aperture in the cup.

4. A device as claimed in Claim 3, characterised in that each diaphragm is formed with corrugations (9, 10) and the base of the cup and the flanged spigot are formed with respectively matching corrugations.

5. A device as claimed in any one of Claims 1 to 4, characterised in that a damper mechanism is provided for suppressing pneumatic or hydraulic harmonics of the diaphragms, and wherein the damper mechanism is in the form of a spider member the body of which is attached to said valve member and the legs of which are in frictional contact with the wall(s) of the chamber.

6. A control or regulating system comprising at least one pressure transmitting device mounted in a tank (40), pipe or the like in which or through which the level or the flow of liquid is to be controlled so as to be in contact with said liquid, means (45) for supplying a fluid under pressure to said device, signal-generating means (46) responsive to the pressure of said fluid in said device, and control means (43, 44) for controlling the level and/or flow of the liquid in response to signals generated by said signal-generating means, characterised in that the pressure transmitting device is the device claimed in any one of Claims 1 to 5 with its said second diaphragm in contact with the liquid.

7. A system as claimed in Claim 6, characterised in that the space between the diaphragms is filled with a gas or liquid which is compatible with the process being controlled.

8. A system as claimed in Claim 6 or 7, characterised in that said fluid supply means includes a pressure regulator for supplying fluid at a substantially constant flow rate to the device.

**Patentansprüche**

1. Als Funktionselement eines Steuer- oder Regelungssystems verwendbare Druckübertragungsvorrichtung, die ein eine Kammer (17) definierendes Körperteil, eine erste, das ein Ende der Kammer abschließende Membran (7), eine zweite Membran (8), ein die erste und die zweite Membran trennendes Trennteil (14), eine Auslaufdüse (18), die so in der Kammer angeordnet ist, daß sie nach Bewegung der ersten Membran schließbar ist, und Einrichtungen (29, 30), die unter Druck stehende Flüssigkeit in die Kammer lassen, umfaßt, wobei die Vorrichtung derart angeordnet ist, daß, wenn der Druck auf der Außenseite der von der Kammer entfernten Membran größer als der Druck in der Kammer ist, sich die zweite Membran mit der ersten Membran bewegt, so daß das Schließen der Auslaufdüse verursacht wird und sich in der Kammer Druck bis zu einem Wert aufbauen kann, bei dem der Druck in der Kammer gleich dem in der zweiten Membran ist, wodurch ein Öffnen der Auslaufdüse und ein Auslaufen der Flüssigkeit gestattet werden dadurch gekennzeichnet, daß sie ein Kopfteil (6), das die erste und zweite Membran aufnimmt und stützt, und ein Ventilteil (15) umfaßt, das mit der ersten Membran in Verbindung steht, und daß die erste und die zweite Membran (7, 8) metallische Membranen sind, die an Ort und Stelle angeschweißt und am Trennteil (14) befestigt sind, und daß der Raum zwischen der Membranen (7, 8) mit einer unter Druck stehenden Flüssigkeit oder einem Gas gefüllt und abgedichtet ist.

2. Vorrichtung nach Anspruch 1, dadurch gekennzeichnet, daß die Vorrichtung im wesentlichen pilzförmig ist, wobei der Kopf die Membranen aufnimmt und abstützt, und ein Stiel (1) die Kammer definiert.

3. Vorrichtung nach Anspruch 1 oder 2, dadurch gekennzeichnet, daß das Kopfteil (6) aus zwei Teilen besteht, von denen das eine als geflanschter Zapfen (5), der die erste Membran (7) aufnimmt, und der andere als in der Mitte mit einer Öffnung versehener Becher (6), der die zweite Membran (8) aufnimmt, ausgebildet sind, wobei die beiden Teile so angeordnet sind, daß die Basis des Bechers (6) zwischen den beiden Membranen liegt und das Trennteil durch die mittige Öffnung in dem Becher hindurchgeht.

4. Vorrichtung nach Anspruch 3, dadurch gekennzeichnet, daß jede Membran mit Wellen (9, 10) ausgebildet ist und die Basis des Bechers und der geflanschte Zapfen mit jeweils passenden Wellen ausgebildet sind.

5. Vorrichtung nach einem der Ansprüche 1 bis 4, dadurch gekennzeichnet, daß ein Dämpfermechanismus zur Unterdrückung pneumatischer oder hydraulischer Unterschwingungen der Membranen vorgesehen ist, wobei der Dämpfermechanismus die Form einer Spinne hat, deren Körper am Ventilteil befestigt ist und deren Beine mit der Wand (den Wänden) der Kammer in Reibungskontakt stehen.

6. Steuer- oder Regelungssystem, das wenigstens eine in einem Behälter (40), einem Rohr oder dergl. angeordnete Druckübertragungsvorrichtung, in der oder durch die der Pegel oder der Fluß von Flüssigkeit gesteuert werden soll, damit Kontakt mit der Flüssigkeit besteht, eine Einrichtung (45) für die Zufuhr von Flüssigkeit unter Druck zu der Vorrichtung, eine signalerzeugende Einrichtung (46), die auf den Druck der Flüssigkeit in der Vorrichtung anspricht, und Steuerungseinrichtungen (43, 44) umfaßt, die den Pegel und/oder den Fluß der Flüssigkeit in Abhängigkeit von den durch die signalerzeugende Einrichtung erzeugten Signalen steuert, dadurch gekennzeichnet, daß die Druckübertragungseinrichtung die in einem der Ansprüche 1 bis 5 beanspruchte Vorrichtung ist, wobei ihre zweite Membran mit der Flüssigkeit in Berührung ist.

7. System nach Anspruch 6, dadurch gekennzeichnet, daß der Raum zwischen den Membranen mit einem Gas oder einer Flüssigkeit gefüllt ist, die mit dem zu steuernden Verfahren vereinbar ist.

8. System nach Anspruch 6 oder 7, dadurch gekennzeichnet, daß die Flüssigkeitszufuhreinrichtung einen Druckregler für die Zufuhr von Flüssigkeit zu der Vorrichtung bei im wesentlichen konstanter Fließgeschwindigkeit einschließt.

**Revendications**

1. Dispositif de transmission de pression pouvant être utilisé comme élément fonctionnel d'une installation de commande ou de régulation, comprenant un élément de corps qui délimite une chambre (17), un premier diaphragme (7) qui ferme une extrémité de la chambre, un deuxième diaphragme (8), un élément séparateur (14) qui sépare le premier et le deuxième diaphragmes, un ajutage de fuite (18) monté dans la chambre de manière à pouvoir se fermer en réponse au mouvement du premier diaphragme et des moyens (29, 30) qui servent à admettre un fluide sous pression dans la chambre, l'arrangement du dispositif étant tel que, lorsque la pression exercée sur la face externe du deuxième diaphragme qui est à l'opposé de la chambre est supérieure à la pression régnant dans la chambre, le deuxième diaphragme se déplace avec le premier diaphragme pour provoquer la fermeture de l'ajutage de fuite et permettre à la pression régnant dans la chambre de s'élever jusqu'à une valeur à laquelle la pression régnant dans la chambre est égale à la pression exercée sur le deuxième diaphragme, en permettant ainsi à l'ajutage de s'ouvrir et en permettant an fluide de s'échapper, caractérisé en ce qu'il comprend un élément de tête (6) qui porte et soutient le premier et la deuxième diaphragmes et un élément de soupape (15) associé au premier diaphragme et en ce que le premier et le deuxième diaphragmes (7, 8) sont des diaphragmes métalliques soudés en place et fixés à l'élément séparateur (14) et en ce que l'espace compris entre les diaphragmes (7, 8) est rempli d'un liquide ou d'un gaz sous pression et scellé.

2. Dispositif suivant la revendication 1, caractérisé en ce que le dispositif est sensiblement en forme de champignon, dont la tête porte et soutient les diaphragmes et dont la tige (1) délimite ladite chambre.

3. Dispositif suivant la revendication 1 ou 2, caractérisé en ce que l'élément de tête (6) est formé de deux parties dont l'une se présente sous la forme d'une tubulure à bride (5), qui porte le premier diaphragme (7) et l'autre se présente sous la forme d'une coupelle (6) percée d'une ouverture en son centre et qui porte le deuxième diaphragme (8), les deux parties étant assemblées de telle manière que la base de la coupelle (6) se trouve entre les deux diaphragmes, l'élément séparateur passant à travers l'ouverture centrale de la coupelle.

4. Dispositif suivant la revendication 3, caractérisé en ce que chaque diaphragme est muni d'ondulations (9, 10) et que la base de la coupelle et la tubulure à bride présentent des ondulations qui leur correspondent respectivement.

5. Dispositif suivant l'une quelconque des revendications 1 à 4, caractérisé en ce qu'un mécanisme amortisseur est prévu pour supprimer les harmoniques pneumatiques ou hydrauliques des diaphragmes et dans lequel le mécanisme amortisseur se présente sous la forme d'un élément en croisillon dont le corps est fixé à l'élément de soupape et dont les branches sont en contact de frottement avec la paroi ou les parois de la chambre.

6. Installation de commande ou de régulation comprenant au moins un dispositif de transmission de pression monté dans un réservoir (40), un tube ou équivalent dans lequel ou à travers lequel il s'agit de commander le niveau ou le débit de liquide, de manière à être en contact avec ledit liquide, des moyens (45) destinés à acheminer un fluide sous pression audit dispositif, des moyens générateurs de signaux (46) qui répondent à la pression dudit fluide dans ledit dispositif et des moyens de commande (43, 44) destinés à commander le niveau et/ou le débit du liquide en réponse à des signaux engendrés par lesdits moyens générateurs de signaux, caractérisée en ce que le dispositif de transmission de pression est le dispositif revendiqué dans l'une quelconque des revendications 1 à 5, ledit deuxième diaphragme de ce dispositif étant en contact avec le liquide.

7. Installation suivant la revendication 6, caractérisée en ce que l'espace compris entre les diaphragmes est rempli d'un gaz ou d'un liquide qui est compatible avec le processus à commander.

8. Installation suivant la revendication 6 ou 7, caractérisée en ce que lesdits moyens d'acheminement de fluide comprennent un régulateur de pression destiné à fournir le fluide au dispositif à un débit sensiblement constant.

Fig. 1.

Fig. 2.